(19) Europäisches Patentamt / European Patent Office / Office européen des brevets

(11) **EP 3 603 774 A1**

(12) **EUROPEAN PATENT APPLICATION**
published in accordance with Art. 153(4) EPC

(43) Date of publication:
**05.02.2020 Bulletin 2020/06**

(21) Application number: **18772070.1**

(22) Date of filing: **22.03.2018**

(51) Int Cl.:
*B01D 53/86* (2006.01)   *B01D 39/14* (2006.01)
*B01D 39/16* (2006.01)   *B01D 46/02* (2006.01)
*B01D 53/94* (2006.01)   *B01J 23/22* (2006.01)
*B01J 23/34* (2006.01)   *B01J 31/32* (2006.01)
*B01J 31/36* (2006.01)

(86) International application number:
**PCT/JP2018/011325**

(87) International publication number:
**WO 2018/174137 (27.09.2018 Gazette 2018/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2017   JP 2017058754**

(71) Applicant: **Toray Industries, Inc.**
**Tokyo 103-8666 (JP)**

(72) Inventors:
• **TAKEDA, Masaaki**
  **Otsu-shi**
  **Shiga 520-2141 (JP)**
• **ONOUCHI, Yuto**
  **Osaka-shi**
  **Osaka 530-8222 (JP)**

(74) Representative: **Mewburn Ellis LLP**
**City Tower**
**40 Basinghall Street**
**London EC2V 5DE (GB)**

(54) **FILTER MEDIUM AND BAG FILTER**

(57)    An object of the present invention is to provide a filter medium and a bag filter for exhaust gas removal in which dropping off and scattering of a catalyst is suppressed during production and during use. Provided is a filter medium containing a fiber layer and a catalyst layer, the catalyst layer containing a catalyst and fibril fibers as main components.

【Fig.1】

EP 3 603 774 A1

**Description**

TECHNICAL FIELD

The present invention relates to a filter medium and a bag filter.

BACKGROUND ART

Conventionally, bag filters have been provided for the purpose of removing dust in exhaust gas from incineration plants, coal boilers and the like. However, in recent years, removal of acid gases such as NOx and SOx in exhaust gas, heavy metals, and toxic gases such as dioxins has also been required. Then, in order to meet the above requirements, a method of decomposing and removing toxic gases and the like using a bag filter on which a catalyst is supported had been adopted. Moreover, the following are specifically known as the bag filter on which a catalyst is supported. That is, Patent Document 1 discloses a bag filter using a filter medium obtained by immersing a non-woven fabric composed of polyimide fibers in a catalyst slurry. Further, Patent Document 2 discloses a bag filter using a filter medium obtained by mixing non-woven fabric and catalyst particles and subjecting the mixture to needle punching. Then, Patent Document 3 discloses a bag filter using a filter medium obtained by forming fibers obtained by spinning a resin composition containing a catalyst into a non-woven fabric or the like. Furthermore, Patent Document 4 discloses a bag filter using a filter medium obtained by sandwiching a reinforcement cloth on which a catalyst is supported by a binder with a plurality of non-woven fabrics and the like to form a laminate and subjecting the laminate to needle punching.

PRIOR ART DOCUMENTS

PATENT DOCUMENTS

   Patent Document 1: Japanese Patent Laid-open Publication No. 10-180039
   Patent Document 2: Japanese Patent Laid-open Publication No. 08-196830
   Patent Document 3: Japanese Unexamined Patent Application Publication (Translation of PCT Application) No. 11-508822
   Patent Document 4: Japanese Patent Laid-open Publication No. 2014-166614

SUMMARY OF THE INVENTION

PROBLEMS TO BE SOLVED BY THE INVENTION

The filter medium used for the bag filter disclosed in Patent Document 1 is obtained by preparing a non-woven fabric and then immersing the non-woven fabric in a catalyst slurry, and in this filter medium, there is a problem that the catalyst drops off and scatters during use or the like.
The filter medium used for the bag filter disclosed in Patent Document 2 has a problem that a large amount of catalyst drops off and scatters from the filter medium when needle punching is performed in its production process. In addition, in this filter medium, there is a problem that the catalyst drops off and scatters even during use or the like.
In the filter medium used for the bag filter disclosed in Patent Document 3, since the catalyst is kneaded into fibers, dropping off and scattering of the catalyst from the filter medium is suppressed. However, since the catalyst that functions effectively in this filter medium is limited to those disposed on the fiber surface, there is a problem that the catalyst disposed inside the fiber is not effectively utilized. Further, in order to impart high toxic gas adsorption and removal ability and the like to the filter medium and the bag filter, it is necessary to support a large amount of catalyst, and there is also a problem that cost of the filter medium and the bag filter is greatly increased.
In the filter medium used for the bag filter disclosed in Patent Document 4, although the catalyst is supported on a reinforcement cloth by the binder, there is a problem that the catalyst drops off and scatters when needle punching is performed in its production process.
Therefore, an object of the present invention is to provide a filter medium in which dropping off and scattering of the catalyst is suppressed during production and during use, and a bag filter using the filter medium.

SOLUTIONS TO THE PROBLEMS

As a result of intensive study to solve the above problems, the present inventors found that the object can be realized by specifying the catalyst layer of the filter medium, thereby achieving the present invention.

That is, the filter medium of the present invention has the following configuration.

(1) A filter medium including a fiber layer and a catalyst layer,
the catalyst layer containing a catalyst and fibril fibers as main components.
Further, there are following configurations as preferable aspects of the filter medium.
(2) The filter medium, having two or more fiber layers,
the catalyst layer being disposed on at least one interlayer of the two or more fiber layers.
(3) The filter medium according to any of the above, wherein the catalyst layer is disposed on the outermost layer of at least one surface.
(4) The filter medium according to any one of claims 1 to 3, wherein a total content of the catalyst in the catalyst layer per unit area of the catalyst layer is 150 to 600 g/m$^2$.
(5) The filter medium according to any of the above, wherein the fiber layer contains 70% by mass or more of polytetrafluoroethylene fibers, and the CV value of the fiber diameter of the polytetrafluoroethylene fibers is 10% or less.
Moreover, there is a following bag filter as a preferable application of the filter medium.
(6) A bag filter having the filter medium as defined in any of the above, wherein the filter medium is cylindrical.
Moreover, there are following methods for producing any of the filter media.
(7) A method for producing a filter medium including the steps of:

wet papermaking a slurry containing a catalyst and fibril fibers to obtain a catalyst layer; and
laminating the catalyst layer and a fiber layer.

(8) The method for producing a filter medium, wherein the step of laminating the catalyst layer and the fiber layer is a step of laminating the catalyst layer and the fiber layer by needle punching.

EFFECTS OF THE INVENTION

According to the present invention, it is possible to provide a filter medium in which dropping off and scattering of the catalyst is suppressed during production and during use, and a bag filter using the filter medium.

BRIEF DESCRIPTION OF THE DRAWINGS

Fig. 1 is a schematic cross-sectional view of one embodiment of a filter medium of the present invention.
Fig. 2 is a schematic cross-sectional view of another embodiment of the filter medium of the present invention.
Fig. 3 is a schematic cross-sectional view of another embodiment of the filter medium of the present invention.
Fig. 4 is a schematic configuration diagram of a dioxin removal performance measuring apparatus.

EMBODIMENTS OF THE INVENTION

The filter medium of the present invention includes a fiber layer and a catalyst layer. The catalyst layer has a catalyst and fibril fibers as main components.

In the present invention, the bag filter refers to a filter in which a filter medium is made cylindrical by sewing or the like. Also, one of two end portions of the cylinder may be sealed.

First, the catalyst layer in the filter medium of the present invention will be described. The catalyst layer has a catalyst and fibril fibers as main components.

This catalyst layer decomposes and removes harmful substances such as dioxin, nitrogen oxides and sulfur oxides contained in the air to be purified when the filter medium of the present invention is used as a bag filter. Moreover, since the catalyst is strongly supported by fibril fibers, in the filter medium of the present invention, dropping off and scattering of the catalyst during production and during use are suppressed. In addition, since the fibril fibers are excellent in the ability to support a catalyst, a small amount of fibril fibers contained in the catalyst layer is sufficient to firmly support the catalyst in the catalyst layer. As a result, the filter medium of the present invention has low pressure loss, and can be lightweight and excellent in handleability. On the other hand, in the filter medium described in Patent Document 4, in which the catalyst is supported by the binder, a large amount of binder is required to firmly support the catalyst in the catalyst layer. Therefore, spaces between fibers in the reinforcement cloth are blocked by the large amount of binder used to increase the pressure loss of the filter medium, and also increase the weight of the bag filter using this filter medium. Here, the main component refers that the ratio of the total mass of fibril fibers and catalyst contained in the catalyst layer to the mass of the entire catalyst layer is 70% by mass or more. This ratio is preferably 80% by mass or more, more preferably 90% by mass or more, and further preferably 97% by mass or more, since the dropping off and scattering of the catalyst from the filter medium can be further suppressed.

In addition, the catalyst layer may have components other than the catalyst and the fibril fibers, as long as the effects of the present invention are not impaired. Then, examples of the components other than the catalyst and the fibril fibers can include a dispersing agent which disperses the catalyst and the fibril fibers uniformly, and the like. Examples of the dispersing agent can include an acrylic resin dispersing agent. It is as described above that the catalyst layer in the filter medium of the present invention has a catalyst and fibril fibers as main components.

Moreover, a mechanism by which the catalyst is firmly supported by the fibril fibers in this catalyst layer is presumed as follows. That is, it is presumed that fibril fibers are easily highly entangled and the catalyst is firmly supported on the catalyst layer by highly entangled fibril fibers. Then, the catalyst is firmly supported on the catalyst layer, whereby the dropping off and scattering of the catalyst from the filter medium of the present invention are greatly suppressed.

Moreover, example of the form of the catalyst layer includes a non-woven fabric. Examples of the non-woven fabric can include wet non-woven fabrics and dry non-woven fabrics. Also, examples of the wet non-woven fabric can include wet paper, and examples of the dry non-woven fabric can include dry paper. The catalyst layer is preferably wet paper, from the viewpoint of capable of supporting a large amount of catalyst while keeping the thickness of the catalyst layer small, and further, capable of supporting the catalyst more firmly on the catalyst layer, and further suppressing the dropping off and scattering of the catalyst from the filter medium. Furthermore, the filter medium of the present invention may include a plurality of catalyst layers, and examples of the filter medium including a plurality of catalyst layers can include a form having a laminate of a plurality of catalyst layers.

Next, the fibril fibers used in the catalyst layer of the filter medium of the present invention will be described. The fibril fiber is defined as a fiber in a state where one fiber is split into two or more thin fibers in the fiber length direction. It may be split into thin fibers in all regions in the longitudinal direction from one fiber, or may be split in the longitudinal direction only in a partial region in the longitudinal direction. The length of the split part is preferably 50% or more of the length of the original fiber. Also, the split thin fibers may be branched, and the tip may be separated from the original fibers or other thin fibers.

Examples of fibers to be a raw material of the fibril fiber include wood pulp, aramid fibers, acrylic fibers, polytetrafluoroethylene (PTFE) fibers, and polytetrafluoroethylene fine powder. These fibers have a property of being easily split in the longitudinal direction. Among them, those made of aramid and polytetrafluoroethylene are preferable from the viewpoint of heat resistance of the bag filter.

The fibers to be a raw material can be fibrillated into fibril fibers. Examples of the production method include a method of swelling fibers to be a raw material with liquid and applying force to the fibers, and a method of beating fibers to be a raw material. In addition, the polytetrafluoroethylene fine powder has a property of fibrillating under application of shear force, and fibrillated polytetrafluoroethylene fine powder can be used as a fibril fiber.

The catalyst layer can also contain fibers other than fibril fibers. Examples of the material include those shown in the fibril fiber portions. The ratio of the fibril fibers to the entire fibers in the catalyst layer is preferably 80% by mass or more, and further preferably 90% by mass.

Further, the catalyst used in the catalyst layer of the filter medium of the present invention is capable of chemically decomposing a target component such as dioxin, nitrogen oxide, or sulfur oxide. Specific examples of the catalyst can include metal oxide catalysts consisting of a single substance or a complex of oxides of metals selected from one or more of titanium, vanadium, tungsten, manganese, cobalt and the like. Among them, considering catalytic effect and cost, the catalyst used for the filter medium of the present invention is preferably one containing manganese dioxide and/or vanadium pentoxide.

The thickness of the catalyst layer is preferably 0.1 to 1.2 mm. When the thickness of the catalyst layer is 0.1 mm or more, a larger amount of catalyst can be supported. On the other hand, when the thickness of the catalyst layer is 1.2 mm or less, handleability of the bag filter can be further improved. From the above circumstances, the upper limit of the thickness is more preferably 1.0 mm or less. Here, the filter medium of the present invention may also take a form having a plurality of catalyst layers, but in such a case, the thickness of the catalyst layer refers to the total value of the thicknesses of the plurality of catalyst layers.

The basis weight of the catalyst layer is preferably 300 to 750 $g/m^2$. When the basis weight of the catalyst layer is 300 $g/m^2$ or more, a larger amount of catalyst can be more firmly supported. On the other hand, when the basis weight of the catalyst layer is 750 $g/m^2$ or less, the weight of the bag filter can be further reduced, and the handleability of the bag filter can be further improved. From the above circumstances, the upper limit of the basis weight is more preferably 600 $g/m^2$ or less. Here, the filter medium of the present invention may also take a form having a plurality of catalyst layers, but in such a case, the basis weight of the catalyst layer refers to the total value of the basis weights of the plurality of catalyst layers.

Further, by using the fibril fibers of the present invention instead of ordinary fibers, the effects of the present invention are obtained regardless of the amount of catalyst as long as the catalyst has a catalytic function. However, considering that the filter medium of the present invention is used as a bag filter, a total content of the catalyst in the catalyst layer per unit area of the catalyst layer is preferably 150 to 600 $g/m^2$. By setting the total content of the catalyst to 150 $g/m^2$ or more, the adsorptive removal performance of toxic gas of the filter medium can be further improved. On the other hand, by setting the total content of the catalyst to 600 $g/m^2$ or less, dropping off and scattering of the catalyst from the bag filter can be further suppressed. From the above circumstances, the total content of the catalyst is more preferably 180 $g/m^2$ or more, and further preferably 200 $g/m^2$ or more. From the above circumstances, the total content of the catalyst is more preferably 500 $g/m^2$ or less, and further preferably 450 $g/m^2$ or less. Here, the filter medium of the present invention may also take a form having a plurality of catalyst layers, but in such a case, the total content of the catalyst in the catalyst layer refers to the total value of the contents of the catalyst in each catalyst layer of the plurality of catalyst layers per unit area of the catalyst layer.

It has been described above that either manganese dioxide or vanadium pentoxide is preferred as the catalyst used for the filter medium. The total content of manganese dioxide and vanadium pentoxide is preferably 150 to 600 $g/m^2$. By setting the total content of the catalysts to 150 $g/m^2$ or more, the adsorptive removal performance of the toxic gas of the filter medium can be further improved. On the other hand, by setting the total content of the catalyst to 600 $g/m^2$ or less, the dropping off and scattering of the catalyst from the bag filter can be further suppressed. From the above circumstances, the total content of the catalysts is more preferably 180 $g/m^2$ or more, and further preferably 200 $g/m^2$ or more. The total content of the catalysts is more preferably 500 $g/m^2$ or less, and further preferably 450 $g/m^2$ or less. The catalyst showing the total content in this paragraph may contain either manganese dioxide or vanadium pentoxide, and is not required to essentially contain both.

Next, the content of fibril fibers contained in the catalyst layer is preferably 10 to 50% by mass based on the entire catalyst layer. By setting the content of fibril fibers to 10% by mass or more, the dropping off and scattering of the catalyst from the filter medium and the bag filter can be further suppressed. On the other hand, by setting the content of fibril fibers to 50% by mass or less, sufficient catalytic performance can be obtained. From the above circumstances, the content of fibril fibers is more preferably 15% by mass or more, and further preferably 20% by mass or more. From the above circumstances, the content of fibril fibers is more preferably 40% by mass or less, and further preferably 35% by mass or less.

It is as described above that the catalyst layer can contain other than fibril fibers and catalysts as long as the effects of the present invention are not impaired. However, examples of those other than fibril fibers and catalysts can include organic binders and inorganic binders such as acrylic as a dispersing agent or coagulant, flame retardants such as aluminum hydroxide, and the like. Here, the filter medium of the present invention may also take a form having a plurality of catalyst layers, but in such a case, the content of fibril fibers in the catalyst layer refers to the total content of fibril fibers contained in the plurality of catalyst layers based on the entire plurality of catalyst layers.

Next, the fiber layer used for the filter medium of the present invention will be described. The filter medium of the present invention includes a fiber layer. Moreover, when air is made to flow in the direction of the surface on the opposite side of the filter medium from the surface on which the fiber layer is disposed outside the catalyst layer in the filter medium, the fiber layer plays a role of collecting particles (dust) contained in the air. That is, the filter medium of the present invention has a fiber layer, thereby a bag filter using this filter medium has the same collection performance as dust collection performance of the conventional bag filter. Further, in addition to the above role, this fiber layer has a role of suppressing the dropping off and scattering of the catalyst from the surface on which the fiber layer is disposed outside the catalyst layer of the filter medium when using the filter medium, also a role of giving a strength that can withstand sewing the filter medium to the bag filter, and the like.

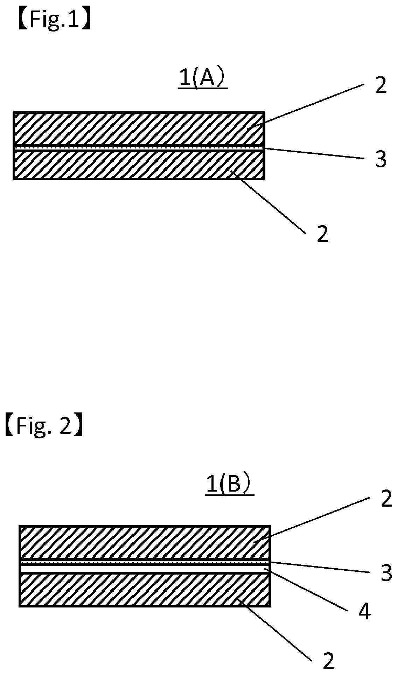

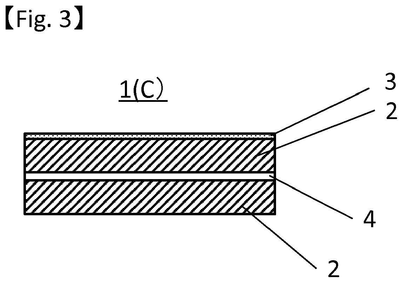

For example, in filter medium 1(A) of Fig. 1 and filter medium 1(B) of Fig. 2, both sides correspond to the surfaces on which the fiber layer is disposed outside. In filter medium 1(C) shown in Fig. 3, a lower surface on which a fiber layer 2 is disposed in the outermost layer corresponds to this surface.

In addition, according to comparison between Example 1 and Comparative Example 2 described later, it can be seen that it is insufficient that the filter medium or the like has only the fiber layer to suppress the dropping off and scattering of the catalyst, and it is necessary that the catalyst layer of the filter medium or the like have fibril fibers. That is, the above can be said from the point that, while the dropping off and scattering of the catalyst are suppressed in the filter medium of Example 1, the dropping off and scattering of the catalyst are not suppressed in the filter medium of Comparative Example 2 and the like in which the fibril fibers used in the filter medium of Example 1 and the like are replaced with a binder (starch).

Examples of the form of the fiber layer can include woven fabric, knitted fabric and non-woven fabric, and the like, and non-woven fabric is preferable. Moreover, specific examples of this non-woven fabric can include a thermal bond non-woven fabric, a needle punch non-woven fabric, a water jet non-woven fabric, and the like. Among them, a needle punch non-woven fabric is preferable from the viewpoint of productivity that multi-layer lamination of a plurality of fiber layers and multi-layer lamination of a fiber layer and a catalyst layer can be performed in one step.

Next, as the fibers constituting the fiber layer, heat resistance is required when a filter medium is used as a bag filter for a waste incineration plant or a coal boiler, so that organic fibers such as fluorine-based fibers such as polytetrafluoroethylene fibers, aramid fibers such as meta-aramid and para-aramid, polyphenylene sulfide fibers, polyimide fibers and polybenzobiphenyl fibers, and inorganic fibers such as glass fibers, silica fibers and basalt fibers are used alone or in combination. In particular, polytetrafluoroethylene fibers, glass fibers, silica fibers and the like, which can be used at high temperatures, are preferably used alone or in mixtures for a bag filter for a waste incineration plant.

Moreover, the polytetrafluoroethylene fiber used here is more preferable when CV of a fiber diameter is less than 10%. Such fiber can be obtained by matrix spinning. The matrix spinning is a spinning method in which polytetrafluoroethylene fine powder is dispersed in cellulose or the like and solution-spun, and then the cellulose or the like in the matrix is burned off. By the matrix spinning, fibers with a substantially round cross section and uniform fiber diameter are obtained, and a more uniform non-woven fabric as compared with polytetrafluoroethylene fibers of other methods is obtained. When this is used in mixtures with glass fibers, silica fibers and the like, it is preferable to contain 70% or more.

The basis weight of the fiber layer is preferably 100 to 800 g/m$^2$. When the basis weight is 100 g/m$^2$ or more, occurrence of uneven thickness of the fiber layer and uneven basis weight of the fiber layer can be suppressed, and also the fiber layer has more excellent property of capturing particles (dust) in the air and will be better as a support of the catalyst layer. In addition, when the basis weight is 800 g/m$^2$ or less, the weight of the filter medium and a bag filter using this filter medium is reduced, the handleability of the filter medium and the bag filter using this filter medium is improved, and also air permeability of the filter medium and the bag filter using this filter medium will also be better.

When two or more fiber layers are provided to sandwich the catalyst layer, the basis weight of each layer is preferably 100 to 400 g/m$^2$. Further, the lower limit thereof is preferably 150 g/m$^2$ or more, and more preferably 180 g/m$^2$ or more. On the other hand, the upper limit thereof is preferably 300 g/m$^2$ or less, and more preferably 250 g/m$^2$ or less.

The apparent density (basis weight/thickness) of the fiber layer is preferably 0.10 to 0.40 g/cm$^3$. When the apparent density of the fiber layer is 0.10 g/cm$^3$ or more, the fiber layer has more excellent dust collection performance. On the other hand, when the apparent density of the fiber layer is 0.40 g/cm$^3$ or less, the fiber layer has more excellent air permeability. The apparent density is more preferably 0.15 g/cm$^3$ or more, and more preferably 0.20 g/cm$^3$ or more. On the other hand, the apparent density is more preferably 0.35 g/cm$^3$ or less, and more preferably 0.30 g/cm$^3$ or less. Here, the filter medium of the present invention may also take a form having a plurality of fiber layers, but in such a case, the apparent density of the fiber layer refers to the basis weight of one fiber layer of the plurality of fiber layers.

In order to obtain a fiber layer having such apparent density, it can be achieved, for example, by adjusting the entanglement state by changing needle conditions (thickness, depth, number of punches) of the needle punching. Moreover, it is also possible to adjust by calendar processing or press processing. Here, the filter medium of the present invention may also take a form having a plurality of fiber layers, but in such a case, the density of the fiber layer refers to the density of one fiber layer of the plurality of fiber layers.

Hereinafter, the filter medium of the present invention will be described with reference to the drawings showing an embodiment example of the filter medium of the present invention. It is needless to say that the filter medium of the present invention is not construed as being limited to the embodiment example specifically shown below.

Here, Fig. 1 is a schematic cross-sectional view in one embodiment of the filter medium of the present invention. In the filter medium 1(A), fiber layers 2 are laminated in contact with both surfaces of a catalyst layer 3. In the filter medium of this form, the dropping off and scattering of the catalyst from both sides thereof are more highly suppressed.

Moreover, Fig. 2 is a schematic cross-sectional view of another embodiment of the filter medium of the present invention. In this filter medium 1(B), a fiber layer 2 is laminated in contact with one surface of a catalyst layer 3, and a reinforcement cloth 4 and a fiber layer 2 are laminated in this order in contact with the other surface of the catalyst layer 3. The filter medium of this embodiment example is more excellent in strength and thermal stability by having a reinforcement cloth. Here, as the reinforcement cloth, polyphenylene sulfide (PPS) spun yarn woven fabric, polytetrafluoroethylene (PTFE) woven fabric or the like can be used.

Next, Fig. 3 is a schematic cross-sectional view of another embodiment of the filter medium of the present invention. In this filter medium 1(C), a fiber layer 2, a reinforcement cloth 4 and a fiber layer 2 are laminated in this order on one surface of a catalyst layer 3, and the dropping off and scattering of the catalyst from the surface on which the fiber layer is laminated are very highly suppressed.

In addition, examples of a means for laminating and integrating the catalyst layer and the fiber layer include needle punching, water jetting, thermal bonding, and the like. In the case of a form in which the catalyst layer is sandwiched between the fiber layers as shown in Fig. 1 and Fig. 2, it is preferable to adopt needle punching from the viewpoint that all layers (fiber layer/catalyst layer/fiber layer) can be overlapped and laminated at one time. Moreover, in the filter medium of the present invention, since the catalyst is more firmly supported by the fibril fibers in the catalyst layer, the dropping off and scattering of the catalyst from the catalyst layer are highly suppressed even when the catalyst layer and the fiber layer are superposed and subjected to needle punching. Here, the "integrating" refers that the laminated layers are adjacent to each other to be in a joint state, and to be in a state where they cannot be separated between the layers.

Also, when the catalyst layer is laminated on a surface layer as shown in Fig. 3, it is preferable to use the water jet method because physical damage is small.

Next, a method for producing the filter medium of the present invention will be described. The method for producing the filter medium is not particularly limited, and examples thereof include a method including the steps of wet papermaking a slurry containing a catalyst and fibril fibers to obtain a catalyst layer; and laminating the catalyst layer obtained in the above step and a fiber layer. Here, examples of the lamination means in the step of laminating the catalyst layer and the fiber layer include water jetting, needle punching and the like as described above. Among them, it is also as described above that it is preferable to laminate the layers by needle punching from the viewpoint of productivity in which multiple layers can be laminated in one step. Further, the bag filter can be obtained by processing the filter medium into a cylindrical shape by sewing or the like, as described above.

[Examples]

The filter medium and the bag filter of the present invention will be specifically described below by way of examples, but it is needless to say that the filter medium and the bag filter of the present invention are not construed as being limited to these examples. Moreover, measurements were performed as follows.

(1) Thickness, basis weight

The measurement was made according to JIS L1096 (1999).

(2) Dioxin removal rate

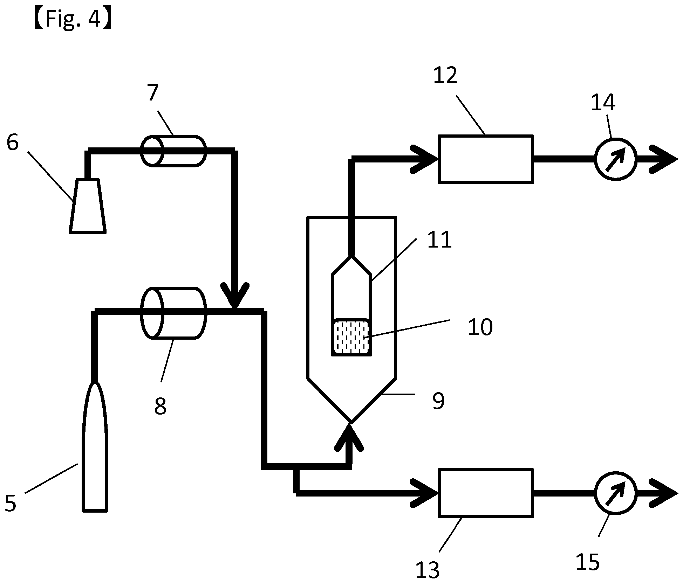

A schematic configuration diagram of an apparatus for measuring dioxin removal rate is shown in Fig. 4. A bag filter sample 10 of which performance is to be measured is carefully attached to a glass inner tube 11 so as not to leak gas. The glass inner tube 11 to which the sample 10 is attached is set in a glass outer tube 9 and kept warm at a measurement temperature (a tank for keeping warm is not shown). Carrier gas is heated from a carrier gas cylinder 5 by a heater 8 and supplied to the glass outer tube 9, and flown through the sample 10 in the direction of a dioxin adsorber 12 via the glass inner tube 11. Next, a dioxin solution 6 is vaporized in a heating furnace 7, then mixed with the carrier gas, and introduced into the glass outer tube 9. Dioxins are all adsorbed from the gas coming out through the sample 10 by the dioxin adsorber 12, the amount of dioxins is quantified, and the total gas flow rate is measured by a flow meter 14 to determine the residual dioxin concentration. On the other hand, in order to determine the initial dioxin concentration of a gas before being supplied to the sample 10, a gas before being supplied to the glass outer tube 9 is collected, and flown through a dioxin adsorber 13 and a flow meter 15 to measure the initial dioxin concentration of the supply gas. Then, the dioxin removal rate (%) is determined by dividing the value obtained by subtracting the residual dioxin concentration from the initial dioxin concentration by the initial dioxin concentration, and multiplying the obtained value by 100.

(3) Dropping off and scattering of catalyst

At the time of producing the filter medium, the dropping off and scattering of the catalyst were evaluated based on the following criteria.

A: Adhesion of the catalyst to the surface of the filter medium cannot be visually confirmed, and dropping off of the catalyst from the filter medium to a production facility of the filter medium cannot be visually confirmed.

B: While dropping off of the catalyst from the filter medium to a production facility of the filter medium cannot be visually confirmed, adhesion of the catalyst to the surface of the filter medium can be visually confirmed.

C: Adhesion of the catalyst to the surface of the filter medium can be visually confirmed, and dropping off of the catalyst from the filter medium to a production facility of the filter medium can also be visually confirmed.

The dropping off and scattering of the catalyst at the time of using the bag filter was evaluated based on the following criteria.

A: Adhesion of the catalyst to the surface of the bag filter cannot be visually confirmed, and dropping off of the catalyst from the bag filter to a facility for using the bag filter cannot be visually confirmed.

B: While dropping off of the catalyst from the bag filter to a facility for using the bag filter cannot be visually confirmed, adhesion of the catalyst to the surface of the bag filter can be visually confirmed.

C: Adhesion of the catalyst to the surface of the bag filter can be visually confirmed, and dropping off of the catalyst from the bag filter to a facility for using the bag filter can also be visually confirmed.

(4) Measurement of fiber diameter CV

In the measurement of fiber diameter CV of the polytetrafluoroethylene fiber, 50 fibers were taken out at random from raw material fiber. Next, the cross section of these fibers was photographed by SEM. Then, the fineness of these fibers was determined from the SEM photograph, the average and the standard deviation were calculated, and the fiber diameter CV was calculated by the following equation:

$$\text{Fiber diameter CV = Standard deviation of fiber}$$

$$\text{diameter/Average of fiber diameter} \times 100 \ (\%)$$

When determining the fiber diameter CV from a fiber sheet, the fiber diameter CV was measured by the following method. The fiber sheet cross section was observed by SEM, and the SEM photograph of the cross section of this fiber sheet was obtained. Then, 50 fibers were randomly selected from this SEM photograph, the fineness of these fibers was determined, and the fiber diameter CV was calculated in the same manner as described above.

(Example 1)

Polytetrafluoroethylene fiber (PTFE fiber) staple (fiber diameter CV = 4.5%) by matrix spinning and glass fiber cut fibers were blended at a mass ratio of 70/30, and two non-woven fabrics with a basis weight of 300 g/m$^2$ were prepared in a needle punch non-woven fabric production process. They are called fiber layer A and fiber layer B, respectively.

On the other hand, a catalyst layer with a basis weight of 430 g/m$^2$ and a thickness of 0.45 mm was prepared by a conventional wet papermaking method using fibril fibers fibrillated from para-aramid pulp and a manganese dioxide catalyst ("AMD" manufactured by Japan Metals & Chemicals Co., Ltd.) as raw materials. The supported amount of the catalyst in this catalyst layer was 310 g/m$^2$, and the content of fibril fibers contained in this catalyst layer was 20% by mass.

Furthermore, a polytetrafluoroethylene woven fabric with a basis weight of 120 g/m$^2$ was prepared and used as a reinforcement cloth.

Next, these were laminated in the order of the fiber layer A, the reinforcement cloth, the catalyst layer, and the fiber layer B so as to be a configuration shown in Fig. 2 and then integrated by needle punching to obtain a filter medium supporting the catalyst. The obtained filter medium had no dropping off of the catalyst, including during processing, and the dioxin removal performance measured using the apparatus of Fig. 4 was 75%. Using this filter medium, a bag filter with a diameter of 150 mm and a length of 6 m was sewn. Although it was somewhat heavier than the conventional bag filter, it could be installed and used on an existing dust collector equipment without any problem.

In addition, evaluation of dropping off and scattering of the catalyst at the time of producing the filter medium was A, and evaluation of dropping off and scattering of the catalyst at the time of using the bag filter was A.

(Comparative Example 1)

A filter medium (that is, a laminate obtained by laminating the fiber layer A, the reinforcement cloth, and the fiber layer B in this order) was obtained in the same manner as in Example 1 except that the catalyst layer was not used. The dioxin removal performance of the obtained filter medium was measured by the same method as in Example 1 to find that the dioxin removal rate was 5%. Since the filter medium and the like of Comparative Example 1 do not contain a catalyst, evaluation of dropping off and scattering of the catalyst was not performed.

(Comparative Example 2)

A catalyst layer supporting 300 g/m$^2$ of a catalyst was prepared by impregnating a glass fiber non-woven fabric with a basis weight of 300 g/m$^2$ in an aqueous slurry prepared by mixing a manganese dioxide catalyst ("AMD" manufactured by Japan Metals & Chemicals Co., Ltd.) and a binder (starch), and drying the glass fiber non-woven fabric. The basis weight of this catalyst layer was 800 g/m$^2$ and the thickness was 3 mm. A filter medium was prepared in the same manner as in Example 1 except that this catalyst layer was used, and further, a bag filter was sewn with this filter medium in the same manner as in Example 1. While the dioxin removal rate of this filter medium was 78%, powder of the catalyst dropped off and workability was poor, at the time of preparing the filter medium and at the time of sewing the bag filter. In addition, evaluation of dropping off and scattering of the catalyst at the time of producing the filter medium and the like was B, and evaluation of dropping off and scattering of the catalyst at the time of using the bag filter was C.

(Comparative Example 3)

A laminate of the fiber layer A, the reinforcement cloth, and the fiber layer B used in the filter medium of Comparative Example 1 was impregnated with an aqueous slurry of a vanadium pentoxide catalyst ("SCN004" manufactured by SAKAI CHEMICAL INDUSTRY CO., LTD.) and a cellulose binder (starch). Subsequently, the laminate was dried to prepare a filter medium supporting 300 $g/m^2$ of the catalyst. Then, this filter medium was sewed to a bag filter. While the dioxin removal rate of this filter medium was 89%, the dropping off of the catalyst occurred at the time of sewing to the bag filter, and working environment deteriorated. The dropping off of the catalyst from the bag filter was also observed, and it was a product very difficult to handle. In addition, evaluation result of dropping off and scattering of the catalyst at the time of producing the filter medium and the like was C, and evaluation of dropping off and scattering of the catalyst at the time of using the bag filter was C.

(Comparative Example 4)

A mixture of polytetrafluoroethylene fiber staple and a manganese dioxide catalyst ("AMD" manufactured by Japan Metals & Chemicals Co., Ltd.) at a mass ratio of 2 : 1 was carded and further needle-punched to attempt preparation of a filter medium. The carding and needle punching caused considerable catalyst dropping off and scattering, and the mixture did not form a filter medium. Since a filter medium could not be obtained, it was also impossible to evaluate the dropping off and scattering of the catalyst as a bag filter.

(Example 2)

A catalyst layer with a basis weight of 250 $g/m^2$ and a thickness of 0.35 mm was prepared by a conventional wet papermaking method using fibril fibers obtained from para-aramid pulp and a vanadium pentoxide catalyst ("SCN004" manufactured by SAKAI CHEMICAL INDUSTRY CO., LTD.). The catalyst supporting amount of this catalyst layer was 200 $g/m^2$, and the content of fibril fibers of this catalyst layer was 20% by mass.
Then, a filter medium of a layer configuration having the fiber layer A, the reinforcement cloth, a laminate obtained by directly laminating two catalyst layers, and the fiber layer B in this order was obtained, in the same manner as in Example 1 except that the laminate obtained by directly laminating two catalyst layers was used.
Workability during needle punching at the time of producing this filter medium was good without dropping off of the catalyst. The obtained filter medium also had no dropping off of the catalyst and had good handleability. Moreover, the dioxin removal rate of this filter medium was 92%. In addition, the dropping off and scattering of the catalyst at the time of producing the filter medium and the like were A, and evaluation of dropping off and scattering of the catalyst at the time of using the bag filter was A.

(Example 3)

Using only polytetrafluoroethylene fiber (PTFE fiber) staple (fiber diameter CV = 4.5%) by matrix spinning also described in Example 1, two non-woven fabrics with a basis weight of 300 $g/m^2$ were prepared in a needle punching process. They are called fiber layer A and fiber layer B, respectively.
On the other hand, polytetrafluoroethylene fine powder and a manganese dioxide catalyst ("AMD" manufactured by Japan Metals & Chemicals Co., Ltd.) were uniformly mixed, and 20 parts by mass of a petroleum resin was added to 100 parts by mass of this mixture to obtain a paste-like mixture. Next, the paste-like mixture was formed into a sheet by extrusion, and then heat treatment (at 220°C for 5 minutes) was performed to prepare a catalyst layer. The basis weight of this catalyst layer was 400 $g/m^2$, the thickness was 0.25 mm, and the supported amount of the catalyst was 290 $g/m^2$. Furthermore, a woven fabric composed of polytetrafluoroethylene fibers with a basis weight of 120 $g/m^2$ was prepared and used as a reinforcement cloth. Subsequently, these were laminated in the order of the fiber layer A, the reinforcement cloth, the catalyst layer, and the fiber layer B so as to be the configuration of Fig. 2, and then integrated by needle punching to obtain a filter medium supporting the catalyst.
The obtained filter medium had no dropping off of the catalyst and had good handleability. Moreover, the dioxin removal rate of the filter medium was 80%. In addition, evaluation of dropping off and scattering of the catalyst at the time of producing the filter medium and the like was A, and evaluation of dropping off and scattering of the catalyst at the time of using the bag filter was A.

(Example 4)

Using only polytetrafluoroethylene fibers with a fiber diameter CV of 61.8%, two non-woven fabrics with a basis weight of 300 $g/m^2$ were prepared in the needle punching process. They are called fiber layer A and fiber layer B, respectively.

On the other hand, a catalyst layer with a basis weight of 350 g/m$^2$ and a thickness of 0.52 mm was prepared by a conventional wet papermaking method using fibril fibers obtained from para-aramid pulp and a vanadium pentoxide catalyst ("SCN004" manufactured by SAKAI CHEMICAL INDUSTRY CO., LTD.). The supported amount of the catalyst of this catalyst layer was 270 g/m$^2$, and the content of fibril fibers was 20% by mass. Furthermore, a woven fabric composed of polytetrafluoroethylene fibers with a basis weight of 120 g/m$^2$ was prepared and used as a reinforcement cloth. Subsequently, the reinforcement cloth was sandwiched between two non-woven fabrics (fiber layer A and fiber layer B), and then integrated by needle punching to obtain a laminate. A catalyst layer was laminated on this laminate, and integrated by water jetting to prepare a filter medium supporting the catalyst of a configuration of Fig. 3. The filter medium is provided in the order of the catalyst layer, the fiber layer A, the reinforcement cloth, and the fiber layer B. Then, the bag filter obtained using this filter medium had no dropping off of the catalyst and had good handleability. The dioxin removal performance of the filter medium was 85%. In addition, evaluation of dropping off and scattering of the catalyst at the time of producing the filter medium and the like was A, and evaluation of dropping off and scattering of the catalyst at the time of using the bag filter was A.

(Example 5)

A catalyst layer with a basis weight of 235 g/m$^2$ and a thickness of 0.35 mm was prepared by a wet papermaking method using fibril fibers obtained from meta-aramid pulp and a vanadium pentoxide catalyst ("SCN004" manufactured by SAKAI CHEMICAL INDUSTRY CO., LTD.). The catalyst supporting amount of this catalyst layer was 200 g/m$^2$, and the content of fibril fibers of this catalyst layer was 15% by mass. The obtained catalyst layer also had no dropping off of the catalyst and had no problem in strength.

In the same manner as in Example 1 except that two catalyst layers were used as the catalyst layer, that is, the fiber layer A, the reinforcement cloth, the catalyst layers (two layers), and the fiber layer B were laminated in this order, and needle punched to obtain a filter medium. There was no catalyst dropping off at the time of preparation of this filter medium and the productivity was good, and the dioxin removal performance of the obtained filter medium was 92%. The bag filter was sewn using this filter medium, and there was no catalyst dropping off during sewing and during use. In addition, the dropping off and scattering of the catalyst at the time of producing the filter medium and the like were B, and the dropping off and scattering of the catalyst at the time of using the bag filter were A by the same visual evaluation as in Example 1.

Table 1 summarizes the configuration and performance of the filter media and the like of Examples 1 to 5, and Table 2 summarizes the configuration and performance of the filter media and the like of Comparative Examples 1 to 3. Since a filter medium was not formed in Comparative Example 4, it was not entered in the table.

[Table 1]

[Table 1]

| | | | Example 1 | Example 2 | Example 3 | Example 4 | Example 5 |
|---|---|---|---|---|---|---|---|
| Fiber layer A | Coniguration | | PTFE fibers/glass fibers (70% by mass/30% by mass) | PTFE fibers/glass fibers (70% by mass/30% by mass) | PTFE fibers (100% by mass) | PTFE fibers (100% by mass) | PTFE fibers/glass fibers (70% by mass/30% by mass) |
| | Basis weight (g/m$^2$) | | 300 | 300 | 300 | 300 | 300 |
| Fiber layer B | Configuration | | PTFE fibers/glass fibers (70% by mass/30% by mass) | PTFE fibers/glass fibers (70% by mass/30% by mass) | PTFE fibers (100% by mass) | PTFE fibers (100% by mass) | PTFE fibers/glass fibers (70% by mass/30% by mass) |
| | Basis weight (g/m$^2$) | | 300 | 300 | 300 | 300 | 300 |
| Reinforcement cloth | Configuration | | PTFE fibers | PTFE fibers | PTFE fibers | PTFE fibers | PTFE fibers |
| | Basis weight (g/m$^2$) | | 120 | 120 | 120 | 120 | 120 |
| Catalyst layer | Basis weight (g/m$^2$) | | 430 | 250 | 400 | 350 | 235 |
| | Thickness (mm) | | 0.45 | 0.35 | 0.25 | 0.52 | 0.35 |
| | Catalyst | Type | Manganese dioxide-based | Vanadium pentoxide-based | Manganese dioxide-based | Vanadium pentoxide-based | Vanadium pentoxide-based |
| | | Supported amount (g/m$^2$) | 310 | 200 | 290 | 270 | 200 |
| | Fibrillated fiber | Type | Aramid pulp | Aramid pulp | PTFE fine powder | Aramid pulp | Aramid pulp |
| | | % By mass content | 20 | 20 | 27.5 | 20 | 15 |
| | Binder | | - | - | - | - | - |
| Layer configuration of filter medium | | | Fiber layer A/base fabric/catalyst layer/ fiber layer B | Fiber layer A/base fabric/catalyst layer/ catalyst layer/fiber layer B | Fiber layer A/base fabric/catalyst layer/ fiber layer B | Catalyst layer/fiber layer A/base fabric/ fiber layer B | Fiber layer A/base fabric/catalyst layer/ catalyst layer/fiber layer B |

EP 3 603 774 A1

(continued)

| | | | Example 1 | Example 2 | Example 3 | Example 4 | Example 5 |
|---|---|---|---|---|---|---|---|
| Filter medium performance | Dioxin removal rate % | | 75 | 92 | 80 | 85 | 92 |
| | Dropping off and scattering of catalyst | During production | A | A | A | A | B |
| | | During using product | A | A | A | A | A |
| | Total basis weight (g/m$^2$) | | 1150 | 1220 | 1120 | 1070 | 1190 |

[Table 2]

| | | | Comparative Example 1 | Comparative Example 2 | Comparative Example 3 |
|---|---|---|---|---|---|
| Fiber layer A | Configuration | | PTFE fibers/glass fibers (70% by mass/30% by mass) | PTFE fibers/ glass fibers (70% by mass/ 30% by mass) | PTFE fibers/glass fibers (70% by mass/30% by mass) |
| | Basis weight (g/m²) | | 300 | 300 | 300 |
| Fiber layer B | Configuration | | PTFE fibers/glass fibers (70% by mass/30% by mass) | PTFE fibers/ glass fibers (70% by mass/ 30% by mass) | PTFE fibers/glass fibers (70% by mass/30% by mass) |
| | Basis weight (g/m²) | | 300 | 300 | 300 |
| Reinforcement cloth | Configuration | | PTFE fibers | PTFE fibers | PTFE fibers |
| | Basis weight (g/m²) | | 120 | 120 | 120 |
| Catalyst layer | Basis weight (g/m²) | | No catalyst layer | 800 | - |
| | Thickness (mm) | | | 3 | - |
| Supported catalyst | Catalyst | Type | | Manganese dioxide-based | Vanadium pentoxide-based |
| | | Supported amount (g/m²) | | 300 | 300 |
| | Fibrillated fiber | Type | | - | - |
| | | % By mass content | | - | - |
| | Binder | | | Starch | Starch |
| Layer configuration of filter medium | | | Laminate obtained by laminating in order of fiber layer A, base fabric and fiber layer B | Fiber layer A/ base fabric/ catalyst layer/ fiber layer B | Fiber layer A/base fabric/fiber layer B (Catalyst was given later by aqueous slurry) |
| Filter medium performance | Dioxin removal rate % | | 5 | 78 | 89 |
| | Dropping off and scattering of catalyst | During production | - | C | C |
| | | During using product | - | C | C |
| | Total basis weight (g/m²) | | 720 | 1520 | 1120 |

DESCRIPTION OF REFERENCE SIGNS

1(A), 1(B), 1(C) :   Filter medium
2:   Fiber layer
3:   Catalyst layer
4:   Reinforcement cloth
5:   Carrier gas cylinder

| 6: | Dioxin solution |
| 7: | Heating furnace |
| 8: | Heater |
| 9: | Glass outer tube |
| 10: | Sample |
| 11: | Glass inner tube |
| 12, 13: | Dioxin adsorber |
| 14, 15: | Flow meter |

**Claims**

1. A filter medium comprising a fiber layer and a catalyst layer,
   the catalyst layer containing a catalyst and fibril fibers as main components.

2. The filter medium according to claim 1, comprising two or more fiber layers,
   the catalyst layer being disposed on at least one interlayer of the two or more fiber layers.

3. The filter medium according to claim 1, wherein the catalyst layer is disposed on the outermost layer of at least one surface.

4. The filter medium according to any one of claims 1 to 3, wherein a total content of the catalyst in the catalyst layer per unit area of the catalyst layer is 150 to 600 g/m$^2$.

5. The filter medium according to any one of claims 1 to 4, wherein the fiber layer contains 70% by mass or more of polytetrafluoroethylene fibers, and the CV value of the fiber diameter of the polytetrafluoroethylene fibers is 10% or less.

6. A bag filter comprising the filter medium according to any one of claims 1 to 5, wherein
   the filter medium is cylindrical.

7. A method for producing a filter medium comprising the steps of:

   wet papermaking a slurry containing a catalyst and fibril fibers to obtain a catalyst layer; and
   laminating the catalyst layer and a fiber layer.

8. The method for producing a filter medium according to claim 7, wherein the step of laminating the catalyst layer and the fiber layer is a step of laminating the catalyst layer and the fiber layer by needle punching.

【Fig.1】

1(A)

2

3

2

【Fig. 2】

1(B)

2

3

4

2

【Fig. 3】

【Fig. 4】

## INTERNATIONAL SEARCH REPORT

| | International application No. |
|---|---|
| | PCT/JP2018/011325 |

**A. CLASSIFICATION OF SUBJECT MATTER**

Int.Cl. B01D53/86(2006.01)i, B01D39/14(2006.01)i, B01D39/16(2006.01)i,
B01D46/02(2006.01)i, B01D53/94(2006.01)i, B01J23/22(2006.01)i,
B01J23/34(2006.01)i, B01J31/32(2006.01)i, B01J31/36(2006.01)i

According to International Patent Classification (IPC) or to both national classification and IPC

**B. FIELDS SEARCHED**

Minimum documentation searched (classification system followed by classification symbols)

Int.Cl. B01D53/86, B01D39/14, B01D39/16, B01D46/02, B01D53/94,
B01J23/22, B01J23/34, B01J31/32, B01J31/36

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 11-508822 A (W.L. GORE & ASSOCIATES, INC.) 03 August 1999, claims, fig. 7-10, page 9, bottom line 1 to page 10, line 2, page 14, lines 7-13, page 16, line 13 to page 17, the last line, page 20, bottom line 1 to page 21, line 1 & US 5620669 A: claims, fig. 7-10, column 4, lines 31-33, column 7, lines 6-14, column 8, line 30 to column 9, line 31, column 11, lines 19-20 & WO 1997/006877 A1 & EP 854751 A1 | 1-6<br>7-8 |
| X<br>A | JP 10-286437 A (DAIKIN INDUSTRIES, LTD.) 27 October 1998, claims, examples, fig. 1-7, paragraphs [0014], [0032] (Family: none) | 1-5<br>6-8 |
| Y | JP 2001-283640 A (TOMOEGAWA CO., LTD.) 12 October 2001, claims, paragraph [0023], example 6 (Family: none) | 1-8 |

☒ Further documents are listed in the continuation of Box C.　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11 June 2018 (11.06.2018) | 19 June 2018 (19.06.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2018/011325

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2007-177344 A (TORAY INDUSTRIES, INC.) 12 July 2007, claims, examples, fig. 1, paragraphs [0002]-[0003] (Family: none) | 1-6<br>7-8 |
| Y | JP 2005-007384 A (MITSUI ENGINEERING & SHIPBUILDING CO., LTD.) 13 January 2005, claims, fig. 1-2, 5, paragraphs [0010], [0023], [0027]-[0030] (Family: none) | 1-8 |
| A | JP 10-005545 A (NITTO DENKO CORP.) 13 January 1998 (Family: none) | 1-8 |

Form PCT/ISA/210 (continuation of second sheet) (January 2015)

**EP 3 603 774 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10180039 A
- JP 8196830 A
- JP 11508822 W
- JP 2014166614 A